# EUROPEAN PATENT SPECIFICATION

(11) **EP 3 222 193 B1**
(45) Date of publication and mention of the grant of the patent: **03.11.2021**
(21) Application number: 17162297.0
(22) Date of filing: 22.03.2017
(51) Int. Cl.: A47L 15/42, F16K 31/16, F16K 11/074, F16K 31/53

(54) **A DISTRIBUTION VALVE**
VERTEILUNGSVENTIL
SOUPAPE DE DISTRIBUTION

(30) Priority: 23.03.2016 TR 201603750
(43) Date of publication of application: 27.09.2017
(73) Proprietor: Vestel Beyaz Esya Sanayi ve Ticaret A.S., 45030 Manisa (TR)
(72) Inventor: SAYIR, Halil, 45030 Manisa (TR); KILAVUZ, Furkan, 45030 Manisa (TR)
(74) Representative: Cayli, Hülya

(56) References cited:
- DE-A1- 3 525 742
- GB-A- 2 023 411
- US-A1- 2016 066 765

## Description

### Technical Field

The present invention relates to a distribution valve which is suitable for use in dishwashers.

### The prior art

The dishwashers having more than one rack of usually at different heights comprise spray arms on the top or bottom of the racks to clean the dishes placed on them properly. Water fed into a dishwasher from a water supply, which may be mains water, is collected in a basin near the floor of the dishwasher, and therefrom delivered to the spray arms. It is determined, by a distribution valve, to which spray arm the washing fluid is to be delivered from the basin.

An exemplary dividing unit is given in a washer disclosed in the document no. EP1264570A1. The washer disclosed in said document comprises a plurality of washing nozzles for spraying washing fluid to the dishes, wherein the washing fluid is guided to the desired washing nozzle by means of a dividing unit. Said dividing unit comprises at least two discharge ports, and the diaphragm comprised by the dividing unit is rotated by a driving motor so as to allow the water to be fed into one of the ports. However, such a dividing unit having a motor with electronic components is risky for washers in which water is circulated, and may cause the motor to be damaged by water intake.

Another exemplary dividing unit is disclosed in document no. DE3525742A1. The dividing unit disclosed in said document comprises a housing having an inlet nozzle and at least two drain sockets, with a rotatable slide for alternately providing the water to pass from one of said drain sockets. The dividing unit comprises a drive wheel and said drive wheel and the slide are connected to two separate, parallel shafts. The rotational movement of the drive wheel, which is connected to the first shaft, is transferred to the plate connected to the second shaft with double gears. However the double gear and parallel shaft structure disclosed in said document necessitate a large inner area for the dividing unit.

### Brief Disclosure of the Invention

With the present invention, there is provided a distribution valve suitable for use in a dishwasher, and comprising at least one body on which at least one inlet in connection with a water supply and at least two outlets in connection with at least two distributors are disposed; at least one plate which is positioned such that it can rotate within the body and which allows the fluid within the body to be fed into at least one of said outlets while preventing the others from receiving the fluid; and at least one opening which is provided on the plate and through which the fluid is passed to reach at least one outlet. The inventive distribution valve is characterized by comprising at least one drive element which is provided within the body and allows the fluid to hit against at least one blade thereof after passing through the inlet such that the fluid rotates around an axis in its center, and which has at least one passage through which the fluid hitting against the blade is passed to reach at least one outlet; at least one drive gear provided on the drive element; at least a first sealing member that is positioned on the side of the drive gear which faces the inlet so as to prevent the fluid from reaching the drive gear; at least a first transmission gear which is in contact with the drive gear and makes a rotational movement by the motion of the drive gear; and at least one central gear to which the rotational motion transmitted by the first transmission gear is transferred and which is connected, on at least one end, with the plate. Further, the distribution valve according to the invention comprises at least one connection end, by which the central gear is connected to the plate, wherien the central gear comprises at least one rod which is positioned such that it passes through the center of the drive gear so as to extend towards the plate, which connects the part where it is connected to the first transmission gear, with a certain distance therebetween, to the connection end.

Thanks to the distribution valve developed with the present invention, the fluid guided into the distributors is prevented from passing over the gear comprised by the valve. Moreover, since the inventive distribution valve does not comprise any electronic component such as a motor and it is operated by the force of the fluid within the dishwasher, both safe and economical distribution valve is achieved.

### The object of the invention

The object of the present invention is to develop a distribution valve which is suitable for use in dishwashers and allows guiding the washing fluid.

Another object of the present invention is to develop a failure-free and durable distribution valve which prevents the fluid from passing over the gear thereof.

Yet another object of the present invention is to develop a safe and economical distribution valve that does not comprise an electronic component.

Still another object of the present invention is to develop a distribution valve which decreases water consumption of dishwashers where it is used.

### Description of Drawings

Exemplary embodiments of the distribution valve developed according to the present invention are illustrated in the accompanying drawings wherein:
Figure 1 is an exploded perspective view of the distribution valve.
Figure 2 is a cross-sectional perspective view of the distribution valve.
Figure 3 is a perspective view of the gears and drive element comprised by the distribution valve in an assembled manner.
Figure 4 shows top views of the plate of the distribution valve in different positions.
Figure 5 is a perspective view of the drive element of the distribution valve.
Figure 6 is a perspective view of the middle cover of the distribution valve.
Figure 7 is a perspective view of the drive gear of the distribution valve.

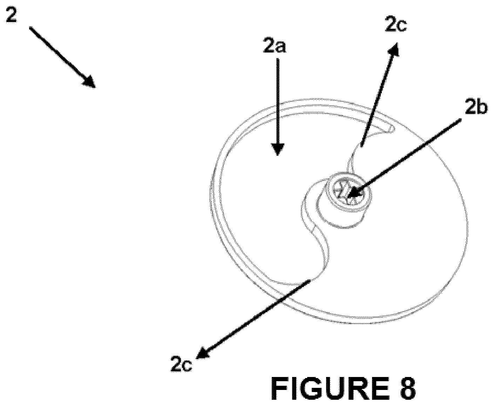

Figure 8 is a top perspective view of the plate of the distribution valve.

All the parts illustrated in the drawings are individually assigned a reference numeral and the corresponding terms of these numbers are listed as follows:

| | |
|---|---|
| Distribution valve | (D) |
| Inlet | (G) |
| Outlet | (C) |
| Body | (1) |
| Plate | (2) |
| Opening | (2a) |
| Connection housing | (2b) |
| End portion | (2c) |
| Drive element | (3) |
| Blade | (3a) |
| Passage | (3b) |
| Drive gear | (3c) |
| First sealing member | (3d) |
| First transmission gear | (4) |
| Central gear | (5) |
| Connection end | (5a) |
| Second sealing member | (5b) |
| Rod | (5c) |
| Middle cover | (6) |
| Hole | (6a) |
| Support | (6b) |
| Upper cover | (7) |

### Description of invention

Dishwashers, in which washing process of dishes are performed, comprise spray arms for spraying washing fluid (such as water or detergent water) to the dishes and a distribution valve for guiding the washing fluid to the preferred spray arm. The distribution valves usually comprise plates which leave openings for passage on the outlet so as to allow the washing fluid to exit the desired outlet after receiving the washing fluid. In the state-of-the- art, the plates generally have electronic components such as a motor, and they are driven by motors. However, the washing fluid circulating within the dishwasher may damage the electronic parts of the motor in the distribution valve, and the particles such as dust, food residue that may be present in the fluid may also hinder the operation of the components such as gears driving the plates. Therefore, with the present invention, there is developed a distribution valve which does not comprise an electronic component such as a motor and which prevents the fluid entering therein from blocking the movement of the components that drive the plate.

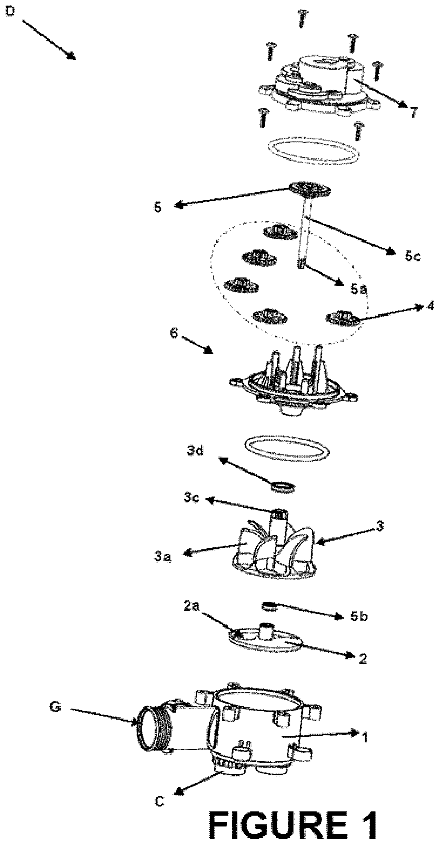

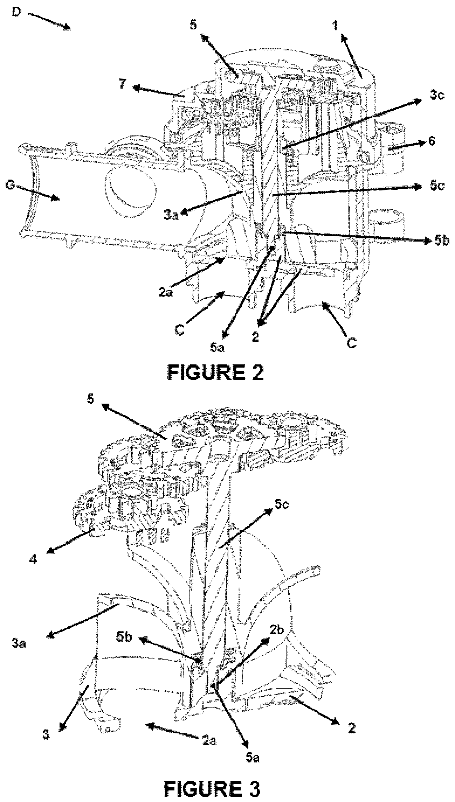

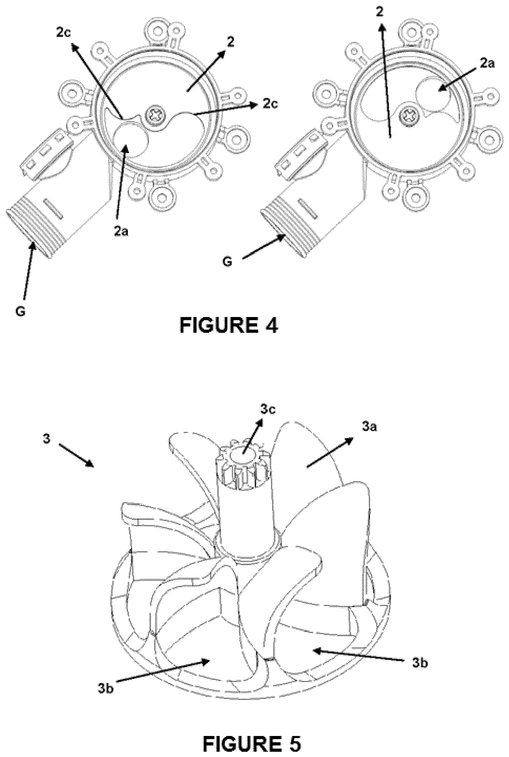

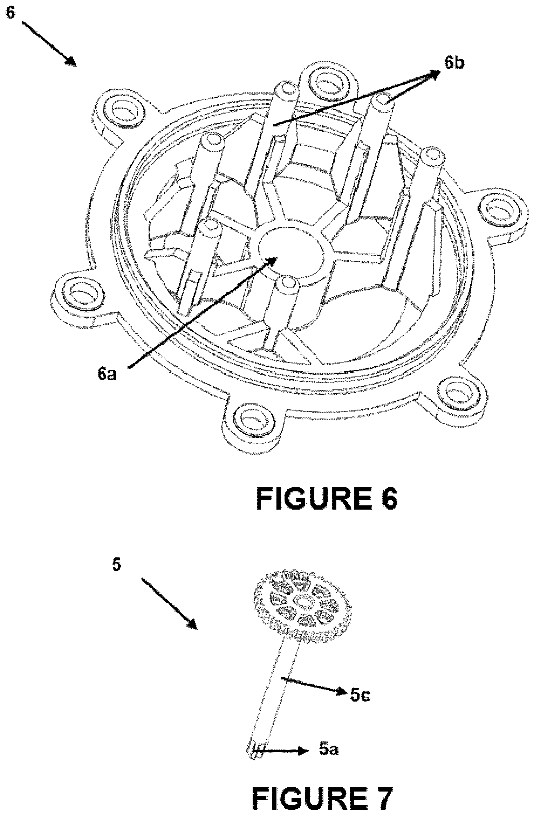

The distribution valve (D) of the present invention, the exemplary views of which are shown in Figures 1-7, is suitable for use in a dishwasher and comprises at least one body (1) on which at least one inlet (G) in connection with a water supply, preferably mains water, and at least two outlets (C) in connection with at least two distributors (not shown in figures), preferably spray arms, are disposed; at least one plate (2) which is positioned such that it can rotate within the body (1) and allows the fluid within the body (1) to be fed into at least one of said outlets (C) while preventing the others from receiving the fluid; and at least one opening (2a) which is provided on the plate (2) and through which the fluid is passed to reach at least one outlet (C). The inventive distribution valve (D) also comprises at least one drive element (3) which is provided within the body (1) and allows the fluid to hit against at least one blade (3a) thereof after passing through the inlet (G) such that the fluid rotates around an axis in its center, and which has at least one passage (3b) through which the fluid hitting against the blade (3a) is passed to reach at least one outlet (C); at least one drive gear (3c) provided on the drive element (3); at least a first sealing member (3d) that is positioned on the side of the drive gear (3c) which faces the inlet (G) so as to prevent the fluid from reaching the drive gear (3c); at least a first transmission gear (4) which is in contact with the drive gear (3c) and makes a rotational movement by the motion of the drive gear (3c); and at least one central gear (5) to which the rotational motion transmitted by the first transmission gear (4) is transferred and which is connected on at least one end with the plate (2). The central gear (5) comprises at least one rod (5c) which connects the part where it is connected to the first transmission gear (4), with a certain distance there between, to the connection end (5a), wherein the rod (5c) preferably passes through the center of the drive gear (3c) of the drive element (3) and extends towards the plate (2). Thanks to the rod (5c), the central gear (5) and the first transmission gear (4) are able to be positioned as far as possible from the area where the drive element (3) is located and in which liquid exists. In this manner, a precaution is taken against the contact of the fluid with the central gear (5) and the first transmission gear (4). The central gear (5) comprises, on its other end that is far from the end where it is connected to the first transmission gear (4), at least one connection end (5a), by which the central gear (5) is connected to the plate (2).

In an exemplary embodiment of the present invention, the water received from a water supply or the washing fluid mixed with cleaning agent is fed to a distribution valve (D) within a dishwasher. The fluid passes through the inlet (G) into the body (1) of the distribution valve (D) and hits against the blade (3a) of the drive element (3) within the body (1). With this force, the drive element (3) rotates around itself. Once the drive element (3) rotates, the drive gear (3c) thereon rotates and begins to rotate the first transmission gear (4). The first sealing member (3d) provided on the drive gear (3c) prevents the fluid from reaching the drive gear (3c) after passing through the inlet (G). In this manner, the particles (such as dust, dirt, food residue etc.), which may be present in the fluid, are prevented from being accumulated on the drive gear (3c) and from hindering movement of the first transmission gear (4). The first transmission gear (4) transfers the motion transmitted by the drive gear (3c) to the central gear (5).The central gear (5) is connected on one side with the plate (2), on which the opening (2a) is provided. Upon being driven by the central gear (5), the plate (2) rotates around itself and allows the fluid to enter into the outlet (C) that has the opening (2a) positioned thereon. In this case, fluid passage is not allowed into the outlets (C) which do not have any opening (2a) positioned thereon. As the fluid hits the blade (3a) and allows continuous rotation of the plate (2), the distributor to which the fluid is sent constantly changes. In this manner, it is ensured that the fluid reaches a wide area of the dishes present in the dishwasher by means of different distributors, while water consumption is reduced due to non-use of each distributor on a continuous basis.

According to an embodiment, the plate (2) in turn comprises at least one connection housing (2b) suitable for receiving the connection end (5a). As the connection end (5a) is inserted in the connection housing (2b), the plate (2) is enabled to rotate simultaneously with the central gear (5) such that a possible slipping thereof is avoided.

In another embodiment of the present invention where the connection end (5a) is present, the central gear (5) comprises, on the side of the connection end (5a) which faces the first transmission gear (4), at least a second sealing member (5b) positioned so as to prevent the fluid therein from reaching the connection end (5a) (for example, a shrink fit not allowing the passage of the fluid through the central gear (5)). As the second sealing member (5b) prevents the fluid from contacting the connection end (5a), any solid particle that may be present in the fluid is prevented from attaching to the connection end (5a) and being accumulated within the connection housing (2b). Therefore, a robust and durable distribution valve (D) is obtained.

In another preferred embodiment of the present invention, the distribution valve (D) comprises at least a middle cover (6) which is positioned preferably on the upper side of the drive element (3) that is far from the floor within the body (1) and which is suitable for allowing the rod (5c) to pass through at least one hole (6a) located in the center thereof. In this embodiment, the central gear (5) and the first transmission gear (4) are located on the upper side of the middle cover (6) that is far from the floor.

In an alternative embodiment of the invention, there is provided at least a second transmission gear between the first transmission gear (4) and the central gear (5), wherein the second transmission gear transmits the rotational motion received from the first transmission gear (4) to the central gear (5). By means of the second transmission gear, the rotational speed and rotational number of the central gear (5) and of the plate (2) connected thereto are able to be adjusted independently from the first transmission gear (4). In this embodiment, the distribution valve (D) comprises, preferably on the middle cover (6), at least two supports (6b) which are preferably in the form of a rod and on which the first transmission gear (4) and the second transmission gear can be placed so as to rotate thereon.

In a preferred embodiment of the invention, the first transmission gear (4) and/or the second transmission gear comprise (s) at least two gears of different diameters, which are superimposed. According to this embodiment, the drive gear (3c) contacts a gear of the first transmission gear (4) and enables the first transmission gear (4) to rotate, whereas the other gear of a different diameter comprised by the first transmission gear (4) contacts a gear of the second transmission gear. As the second transmission gear starts to rotate, the other gear thereof that is not in contact with the first transmission gear (4) transmits the rotational motion to the central gear (5). By means of the superimposed gears comprised by the first transmission gear (4) and the second transmission gear, the amount and speed of rotation of the central gear (5) are able to be adjusted precisely by fitting as many gears as possible into a narrow area. In this embodiment, the supports (6b) comprised by the middle cover (6) have different lengths because the second transmission gear in contact with the first transmission gear (4) is positioned at different heights.

In a preferred embodiment of the invention, the blade (3a) provided on the drive element (3) has a curved structure so as to be filled with the fluid such that the fluid received from the inlet (G) is able to exert enough force to rotate the drive element (3). By making maximum use of the water thanks to the curved structure, it is ensured that the drive element (3) is rotated even with a small amount of water.

In another alternative embodiment of the invention, the distribution valve (D) comprises at least one upper cover (7) which covers the upper part of the body (1) that is far from the outlets (C). The upper cover (7) preferably comprises at least a mounting hole (not shown in figures) for connection thereof to the body (1). In this embodiment, the distribution valve (D) in turn comprises at least one connection member, which may be a screw, suitable for being inserted in the mounting hole.

In another alternative embodiment, the distribution valve (D) comprises at least one gasket provided under the upper cover (7) and/or under middle cover (6). By means of the gasket, the leakage of the fluid within the distribution valve (D) is prevented. In this embodiment, the middle cover (6) in turn comprises at least one other mounting hole in alignment with the mounting hole of the upper cover (7). According to this embodiment, the connection member passes through mounting holes of the upper cover (7) and middle cover (6). Similarly, according to the same embodiment, the body (1) comprises at least one other mounting hole in alignment with the mounting holes of the middle cover (6) and the upper cover (7). In this embodiment, the connection member passes through the mounting holes on the middle cover (6), the upper cover (7) and the body (1) so as to connect these parts to each other.

In another preferred embodiment of the invention, the opening (2a) provided on the plate (2) has a structure which always allows passage of as much fluid as a full width of the outlet (C). In other words, said opening (2a) permits passage of a certain amount of fluid to an outlet (C) while preventing passage of the same amount of fluid through another outlet (C). Therefore, in a preferred embodiment of the invention, angular distance between the successive outlets (C) is equal to each other. Furthermore, the angular width of the opening (2a) provided on the plate (2) is also equal to the angular distance between the successive outlets (C). For example, when the distribution valve (D) developed according to the present invention comprises two outlets (C), said outlets (C) are positioned so as to make an angle of 180° with respect to each other, and the angular width of the opening (2a) provided on the plate (2) is 180°. Similarly, when the distribution valve (D) developed according to the present invention comprises three outlets (C), said outlets (C) are positioned so as to make an angle of 120° with respect to each other, and the angular width of the opening (2a) provided on the plate (2) is 120°. In this manner, the opening (2a) permits passage to an outlet (C) while preventing passage to another outlet (C) to the same extent. In this embodiment, an end portion (2c) of said opening (2a) is in the form of a recess - shaped semicircle whereas the other end portion (2c) is in the form of a projection - shaped semicircle. The radius of said semi-circular forms is preferably equal to the radius of the outlets (C). Accordingly, it is ensured that the outlets (C) are opened and closed in a stable manner by means of the opening (2a).

With the present invention, there is provided a distribution valve (D), which is not only safe due to not having any electronic component, but also robust and durable as it prevents the contact of the fluid with gears while enabling the fluid to be discharged through the desired outlet (C) in the dishwasher where it is used.

## Claims

1. A distribution valve (D) which is suitable for use in dishwashers and comprises at least one body (1) on which at least one inlet (G) for connection with a water supply and at least two outlets (C) for connection with at least two distributors are disposed; at least one plate (2) which is positioned such that it can rotate within the body (1) and which allows the fluid within the body (1) to be fed into at least one of said outlets (C) while preventing the others from receiving the fluid; and at least one opening (2a) which is provided on the plate (2) and through which the fluid is passed to reach at least one outlet (C), the distribution valve (D) comprising:
• at least one drive element (3) which is provided within the body (1) and allows the fluid to hit against at least one blade (3a) thereof after passing through the inlet (G) such that the drive element (3) rotates around an axis in its center, and which has at least one passage (3b) through which the fluid hitting against the blade (3a) is passed to reach at least one outlet (C);
• at least one drive gear (3c) provided on the drive element (3);
• at least a first sealing member (3d) which is positioned on the side of the drive gear (3c) that faces the inlet (G) so as to prevent the fluid from reaching the drive gear (3c);
• at least a first transmission gear (4) which is in contact with the drive gear (3c) and makes a rotational movement by receiving the motion of the drive gear (3c);
• at least one central gear (5) to which the rotational motion transmitted by the first transmission gear (4) is transferred and which is connected, on at least one end, with the plate (2);
• at least one connection end (5a), by which the central gear (5) is connected to the plate (2);
• wherein the distribution valve (D) is
**characterised in that** the central gear (5) comprises
at least one rod (5c) which is positioned such that it passes through the center of the drive gear (3c) so as to extend towards the plate (2), which connects the part where it is connected to the first transmission gear (4), with a certain distance therebetween, to the connection end (5a).

2. A distribution valve (D) according to Claim 1, **characterized in that** the connection end (5a) is located on the other end of the central gear (5) that is far from the end where the central gear (5) is connected to the first transmission gear (4).

3. A distribution valve (D) according to Claim 1 or Claim 2, **characterized in that** the plate (2) comprises at least one connection housing (2b) suitable for receiving the connection end (5a).

4. A distribution valve (D) according to any of the preceding claims, **characterized in that** the central gear (5) comprises, on the side of the connection end (5a) that faces the first transmission gear (4), at least a second sealing member (5b) positioned so as to prevent the fluid therein from reaching the connection end (5a).

5. A distribution valve (D) according to Claim 1, **characterized by** comprising, within the body (1), at least one middle cover (6) which is suitable for allowing the rod (5c) to pass through at least one hole (6a) provided in the center thereof.

6. A distribution valve (D) according to Claim 1, **characterized by** comprising at least a second transmission gear between the first transmission gear (4) and the central gear (5).

7. A distribution valve (D) according to Claim 6, **characterized in that** it comprises, on the middle cover (6), at least two supports (6b) on which the first transmission gear (4) and the second transmission gear can be placed so as to rotate thereon.

8. A distribution valve (D) according to Claim 7, **characterized in that** the supports (6b) are in the form of a rod.

9. A distribution valve (D) according to Claim 1 or Claim 6, **characterized in that** the first transmission gear (4) and/or the second transmission gear comprise(s) at least two superimposed gears which have different diameters from each other.

10. A distribution valve (D) according to Claim 1, **characterized by** comprising at least one upper cover (7) which covers the upper part of the body (1) that is far from the outlets (C).

11. A distribution valve (D) according to Claim 1, **characterized in that** the angular distance between the successive outlets (C) is equal to each other.

12. A distribution valve (D) according to Claim 11, **characterized in that** the angular width of the opening (2a) provided on the plate (2) is equal to the angular distance between the successive outlets (C).

## Patentansprüche

1. Verteilungsventil (D), das zur Verwendung in Geschirrspülern geeignet ist und das wenigstens ein Gehäuse (1), an dem wenigstens ein Einlass (G) zur Verbindung mit einer Wasserzufuhr und wenigstens zwei Auslässe (C) zur Verbindung mit wenigstens zwei Verteilern angeordnet sind, wenigstens eine Platte (2), die so positioniert ist, dass sie sich innerhalb des Gehäuses (1) drehen kann, und die es ermöglicht, dass Fluid innerhalb des Gehäuses (1) in wenigstens einen der Auslässe (C) geleitet wird, während verhindert wird, dass andere Fluid erhalten, und wenigstens eine Öffnung (2a) aufweist, die auf der Platte (2) vorgesehen ist und durch die das Fluid geleitet wird, um den wenigstens einen Auslass (C) zu erreichen, wobei das Verteilungsventil (D) aufweist:
• wenigstens ein Antriebselement (3), das innerhalb des Gehäuses vorgesehen ist und das es ermöglicht, dass das Fluid auf wenigstens eine Schaufel (3a) davon trifft, nachdem es durch den Einlass (G) eingetreten ist, und das wenigstens einen Durchgang (3b) hat, durch den das auf die Schaufel (3a) treffende Fluid geleitet wird, um wenigstens einen Auslass (C) zu erreichen,
• wenigstens ein Antriebszahnrad (3c), das an dem Antriebselement (3) vorgesehen ist,
• wenigstens ein erstes Dichtungsteil (3d), das auf der Seite des Antriebszahnrades (3c) positioniert ist, die dem Einlass (G) zugewandt ist, um so Fluid daran zu hindern, das Antriebszahnrad (3c) zu erreichen,
• wenigstens ein Getriebezahnrad (4), das in Kontakt mit dem Antriebszahnrad (3c) ist und eine Drehbewegung ausführt, indem es die Bewegung des Antriebszahnrades (3c) aufnimmt,
• wenigstens ein zentrales Zahnrad (5), auf das die von dem ersten Getriebezahnrad (4) übertragene Drehbewegung übertragen wird und das an wenigstens einem Ende mit der Platte (2) verbunden ist,
• wenigstens ein Verbindungsende (5a), mit dem das zentrale Zahnrad (5) mit der Platte (2) verbunden ist,
• wobei das Verteilungsventil (D) **dadurch gekennzeichnet ist, dass** das zentrale Zahnrad (5) wenigstens einen Stift (5c) aufweist, der so positioniert ist, dass er durch die Mitte des Antriebzahnrads (3c) verläuft, um so auf die Platte (2) zu zu verlaufen, der den Teil, wo er mit dem ersten Getriebezahnrad (4) verbunden ist, mit einem gewissen Abstand dazwischen, mit dem Verbindungsende (5a) verbindet.

2. Verteilungsventil (D) nach Anspruch 1, **dadurch gekennzeichnet, dass** das Verbindungsende (5a) sich an dem anderen Ende des zentrales Zahnrades (5) befindet, das entfernt von dem Ende ist, wo das zentrale Zahnrad mit dem ersten Getriebezahnrad (4) verbunden ist.

3. Verteilungsventil (D) nach Anspruch 1 oder Anspruch 2, **dadurch gekennzeichnet, dass** die Platte (2) wenigstens eine Verbindungsaufnahme (2b) aufweist, die zur Aufnahme des Verbindungsendes (5a) geeignet ist.

4. Verteilungsventil (D) nach einem der vorhergehenden Ansprüche, **dadurch gekennzeichnet, dass** das zentrale Zahnrad (5) auf derjenigen Seite des Verbindungsendes (5a), die dem ersten Getriebezahnrad (4) zugewandt ist, wenigstens ein zweites Dichtungsteil (5b) aufweist, das so positioniert ist, um das Fluid daran zu hindern, das Verbindungsende (5a) zu erreichen.

5. Verteilungsventil (D) nach Anspruch 1, **dadurch gekennzeichnet, dass** es innerhalb des Gehäuses (1) wenigstens einen mittleren Deckel (6) aufweist, der dazu geeignet ist, um es dem Stift (5c) zu erlauben, durch wenigstens ein in dessen Zentrum vorgesehenes Loch (6a) zu verlaufen.

6. Verteilungsventil (D) nach Anspruch 1, **dadurch gekennzeichnet, dass** es wenigstens ein zweites Getriebezahnrad zwischen dem ersten Getriebezahnrad (4) und dem zentralen Zahnrad (5) aufweist.

7. Verteilungsventil (D) nach Anspruch 6, **dadurch gekennzeichnet, dass** es an dem mittleren Deckel (6) wenigstens zwei Träger (6b) aufweist, auf denen das erste Getriebezahnrad (4) und das zweite Getriebezahnrad platziert werden können, um sich daran zu drehen.

8. Verteilungsventil (D) nach Anspruch 7, **dadurch gekennzeichnet, dass** die Träger (6b) die Form eines Stiftes haben.

9. Verteilungsventil (D) nach Anspruch 1 oder Anspruch 6, **dadurch gekennzeichnet, dass** das erste Getriebezahnrad (4) und/oder das zweite Getriebezahnrad wenigstens zwei übereinander angeordnete Zahnräder aufweisen, die voneinander verschiedene Durchmesser haben.

10. Verteilungsventil (D) nach Anspruch 1, **dadurch gekennzeichnet, dass** es wenigstens einen oberen Deckel (7) aufweist, der den oberen Teil des Gehäuses (1), der von den Auslässen (C) entfernt ist, abdeckt.

11. Verteilungsventil (D) nach Anspruch 1, **dadurch gekennzeichnet, dass** die Winkelabstände zwischen aufeinanderfolgenden Auslässen (10) einander gleich sind.

12. Verteilungsventil (D) nach Anspruch 11, **dadurch gekennzeichnet, dass** die Winkelausdehnung der auf der Platte (2) vorgesehenen Öffnung (2a) gleich dem Winkelabstand zwischen den aufeinanderfolgenden Auslässen (c) ist.

## Revendications

1. Soupape de distribution (D) qui est adaptée à une utilisation dans des lave-vaisselle et comprend au moins un corps (1) sur lequel au moins une entrée (G) pour une connexion avec une alimentation en eau et au moins deux sorties (C) pour une connexion avec au moins deux distributeurs sont disposées ;
au moins une plaque (2) qui est positionnée de manière à pouvoir tourner à l'intérieur du corps (1) et qui permet au fluide à l'intérieur du corps (1) d'être alimenté dans au moins une desdites sorties (C) tout en empêchant les autres de recevoir le fluide ; et au moins une ouverture (2a) qui est prévue sur la plaque (2) et à travers laquelle le fluide passe pour atteindre au moins une sortie (C), la soupape de distribution (D) comprenant :
• au moins un élément d'entraînement (3) qui est prévu à l'intérieur du corps (1) et permet au fluide de heurter au moins une lame (3a) de celui-ci après être passé par l'entrée (G) de sorte que l'élément d'entraînement (3) tourne autour d'un axe en son centre, et qui a au moins un passage (3b) à travers lequel le fluide heurtant la lame (3a) passe pour atteindre au moins une sortie (C) ;
• au moins un engrenage d'entraînement (3c) prévu sur l'élément d'entraînement (3) ;
• au moins un premier élément d'étanchéité (3d) qui est positionné sur le côté de l'engrenage d'entraînement (3c) qui fait face à l'entrée (G) de manière à empêcher le fluide d'atteindre l'engrenage d'entraînement (3c) ;
• au moins un premier engrenage de transmission (4) qui est en contact avec l'engrenage d'entraînement (3c) et effectue un mouvement de rotation en recevant le mouvement de l'engrenage d'entraînement (3c) ;
• au moins un engrenage central (5) auquel le mouvement de rotation transmis par le premier engrenage de transmission (4) est transféré et qui est connecté, sur au moins une extrémité, à la plaque (2) ;
• au moins une extrémité de connexion (5a), par laquelle l'engrenage central (5) est connecté à la plaque (2) ;
• dans lequel la soupape de distribution (D) est **caractérisée en ce que** l'engrenage central (5) comprend
au moins une tige (5c) qui est positionnée de telle sorte qu'elle passe par le centre de l'engrenage d'entraînement (3c) de manière à s'étendre vers la plaque (2), qui connecte la partie où elle est connectée au premier engrenage de transmission (4), avec une certaine distance entre eux, à l'extrémité de connexion (5a).

2. Soupape de distribution (D) selon la revendication 1, **caractérisée en ce que** l'extrémité de connexion (5a) est située sur l'autre extrémité de l'engrenage central (5) qui est éloignée de l'extrémité où l'engrenage central (5) est connecté au premier engrenage de transmission (4).

3. Soupape de distribution (D) selon la revendication 1 ou la revendication 2, **caractérisée en ce que** la plaque (2) comprend au moins un boîtier de connexion (2b) adapté à recevoir l'extrémité de connexion (5a).

4. Soupape de distribution (D) selon l'une quelconque des revendications précédentes, **caractérisée en ce que** l'engrenage central (5) comprend, du côté de l'extrémité de connexion (5a) qui fait face au premier engrenage de transmission (4), au moins un deuxième élément d'étanchéité (5b) positionné de manière à empêcher le fluide qui s'y trouve d'atteindre l'extrémité de connexion (5a).

5. Soupape de distribution (D) selon la revendication 1, **caractérisée en ce qu'**elle comprend, à l'intérieur du corps (1), au moins un couvercle central (6) qui est adapté pour permettre à la tige (5c) de passer à travers au moins un trou (6a) prévu en son centre.

6. Soupape de distribution (D) selon la revendication 1, **caractérisée en ce qu'**elle comprend au moins un deuxième engrenage de transmission entre le premier engrenage de transmission (4) et l'engrenage central (5).

7. Soupape de distribution (D) selon la revendication 6, **caractérisée en ce qu'**elle comprend, sur le couvercle central (6), au moins deux supports (6b) sur lesquels le premier engrenage de transmission (4) et le deuxième engrenage de transmission peuvent être placés de manière à tourner sur ceux-ci.

8. Soupape de distribution (D) selon la revendication 7, **caractérisée en ce que** les supports (6b) ont la forme d'une tige.

9. Soupape de distribution (D) selon la revendication 1 ou la revendication 6, **caractérisée en ce que** le premier engrenage de transmission (4) et/ou le deuxième engrenage de transmission comprend (comprennent) au moins deux engrenages superposés qui ont des diamètres différents l'un de l'autre.

10. Soupape de distribution (D) selon la revendication 1, **caractérisée en ce qu'**elle comprend au moins un couvercle supérieur (7) qui recouvre la partie supérieure du corps (1) qui est éloignée des sorties (C).

11. Soupape de distribution (D) selon la revendication 1, **caractérisée en ce que** la distance angulaire entre les sorties successives (C) est égale entre elles.

12. Soupape de distribution (D) selon la revendication 11, **caractérisée en ce que** la largeur angulaire de l'ouverture (2a) prévue sur la plaque (2) est égale à la distance angulaire entre les sorties successives (C).
